(19) Europäisches Patentamt
European Patent Office
Office européen des brevets

(11) **EP 0 770 171 B1**

(12) **EUROPEAN PATENT SPECIFICATION**

(45) Date of publication and mention
of the grant of the patent:
**06.06.2001 Bulletin 2001/23**

(51) Int Cl.⁷: **F02B 19/12**, F02B 19/16,
F02B 19/18, F02M 57/06

(21) Application number: **95924801.4**

(22) Date of filing: **13.07.1995**

(86) International application number:
**PCT/AU95/00427**

(87) International publication number:
**WO 96/02742 (01.02.1996 Gazette 1996/06)**

(54) **INTERNAL COMBUSTION ENGINE IGNITION DEVICE**

ZÜNDVORRICHTUNG FÜR BRENNKKRAFTMASCHINEN

DISPOSITIF D'ALLUMAGE POUR MOTEUR A COMBUSTION INTERNE

(84) Designated Contracting States:
**AT BE CH DE DK ES FR GB GR IE IT LI LU MC NL
PT SE**

(30) Priority: **13.07.1994 AU 6745894**

(43) Date of publication of application:
**02.05.1997 Bulletin 1997/18**

(73) Proprietor: **THE UNIVERSITY OF MELBOURNE
Parkville, Victoria 3052 (AU)**

(72) Inventor: **WATSON, Harry, Charles
Eltham, VIC 3095 (AU)**

(74) Representative: **Neill, Alastair William
Appleyard
Lees & Co.
15 Clare Road
Halifax West Yorkshire HX1 2HY (GB)**

(56) References cited:
EP-A- 0 377 265        WO-A-93/08385
DE-A- 3 300 945        GB-A- 1 366 733
GB-A- 2 271 808        US-A- 4 144 848

**Description**

## FIELD OF THE INVENTION

This invention relates to ignition devices for internal combustion engines, and more particularly hydrogen assisted jet ignition (HAJI) devices for improving combustion efficiency. In the present specification, the term "hydrogen" is intended to include hydrogen and other fast-burning fuels.

## BACKGROUND OF THE INVENTION

Simultaneous control of exhaust emissions and thermal efficiency is an established goal in engine design. Optimization of engine design is limited by Cycle by Cycle Variability (CBCV), especially for spark ignition engines. CBCV is observed as either variations in the pressure diagram or as variations in flame propagation between consecutive engine cycles. In the vehicle the consequent unsteadiness in delivered engine power results in uneven vehicle progress which has been termed surge. Combustion variations require compromises in engine design, the setting of mixture composition and spark timing. This reduces engine power and efficiency at full load in order to meet roughness, noise, and octane requirements and at part load and idle reduces fuel economy and increases exhaust emissions in order to control surge.

If CBCV could be eliminated, the engine would run at its best economy settings and still produce a smooth and steady output. In addition, the fuel octane requirements could be reduced, or the compression ratio raised, with a consequent improvement in efficiency. Further, the lean limit of engine operation could be extended, resulting in a reduction in exhaust emissions and an improvement in thermal efficiency. It has been shown that the reduction of CBCV in lean-burn engines, together with control of ignition timing, can reduce NOx emissions and at the same time improve engine thermal efficiency. Another important benefit arising from control of cycle variation is the reduction in engine surge and improved vehicle driveability while cruising.

Much research has been conducted on lean-burn engines with the intention of improving efficiency and reducing emissions. The benefits from the lean combustion approach can be theoretically explained as follows. The excess air improves the engine's thermal efficiency by increasing the overall specific heats' ratio, by decreasing the energy losses from dissociation of the combustion products, and by reducing the thermal losses to the engine cooling system. In addition, as the flame temperature drops with decreasing fuel air ratio, the NOx production is exponentially reduced and the excess air may promote a more complete reaction of CO and hydrocarbon fuel emission from crevices and quench layers.

It is concluded that at the present state of development, U.S. emission standards present a considerable challenge to the realization of the fuel economy advantages theoretically inherent in lean burn engines. On the other hand, even though the incentives for lean burn application to automotive engines are valid and have good theoretical foundation, its implementation is a complex problem that requires several conflicting requirements to be satisfied simultaneously. Lean burn operation increases the CBCV and deteriorates vehicle driveability. CBCV increases with increasing air-fuel ratio.

Many attempts have been made to improve combustion efficiency. Such attempts include fuel stratification with a rich mixture in the spark plug region, divided or pre-chamber engines alone or in combination with stratification, and hydrogen enrichment of the whole fuel charge. None of these attempts have been entirely successful and the problems referred to above remain in evidence.

In the case of the non-fuelled divided chamber engines, including the Bosch spark plug patented around 1978, the size (volume, connecting passage length and aperture) of the pre-chamber, can only improve combustion at a particular power output. Thus, while combustion efficiency can be improved at a given power output, energy tends to be lost at full power to the pre-chamber walls and other parts of the main chamber by the impinging jet so that the peak power was reduced by about 10%. Furthermore, since the pre-chamber in the prior art arrangements is unfuelled, relying on the transfer of a fuel mixture from the main chamber, starting in cold conditions can be difficult.

In a paper entitled "High Chemical activity of incomplete combustion products and a method of pre-chamber torch ignition for avalanche activation of combustion in internal combustion engines" by L.A. Gussak of the Institute of Chemical Physics Academy of Sciences of the USSR, Moscow. (Publication No. 750890 of Society of Automotive Engineers USA) the author discusses the effects of pre-chamber torch ignition on the flame front of a hydrocarbon-air mixture and concludes that optimization is achieved by employing a pre-chamber volume of two to three per cent of the compressed combustion chamber volume. While this paper contains some scientific consideration of the combustion products resulting from pre-chamber combustion of a very rich air-hydrogen mixture, the author does not come to any conclusion concerning the likelihood of pre-chamber combustion providing a significant benefit in the improvement of engine thermal efficiency while at the same time reducing Nox emissions.

The Patent literature also contains some reference to the burning of hydrogen in pre-chambers, the most pertinent prior art being U.S. Patent 4,140,090 Lindburg and U.S. Patent 4,760,820 Tozzi. The Lindburg reference provides a small pre-chamber for burning hydrogen bur specifically teaches the introduction of an oxidant to be mixed with the hydrogen fuel to ensure stoiciometric proportions. The reference is also silent as to the nature of the exit passage. The present applicant has found that the mixture in the pre-chamber should preferably be hydrogen rich and the outlet orifice should be carefully dimensioned to ensure that a proper ignition jet stream issues from the orifice to ensure complete combustion of a lean fuel mixture in the combustion chamber.

In the case of the Tozzi reference, the magnetic field generating means introduces undesirable complexity and increased power consumption to generate plasma temperatures of around 4,000 to 6,000°C. Plasma igniters of the type described by Tozzi have not enjoyed commercial success presumably due to the complexity and power consumption difficulties involved.

WO-A-9308385 discloses a torch ignited internal combustion engine with a hydrogen rich mixture in the pre-chamber, with certain ranges of the mixture used and certain dimensions of the engine.

EP-A-377265 discloses the use of one torch passage. DE-A-3300945 discloses the use of two torch passages and also discloses oval torch openings. US A4144848 discloses pairs of diametrically opposed torch passages, partially arranged on a perpendicular axis.

## SUMMARY OF THE INVENTION AND OBJECT

It is an object of the present invention to provide an ignition device by means of which combustion efficiency is improved and the problems outlined above are at least ameliorated.

The invention provides a combustion engine having at least one combustion chamber having two inlet valves and two exhaust valves, an ignition device associated with said combustion chamber including a small pre-chamber having a volume substantially falling within the range 0.5% to less than 2% of the clearance volume of the combustion chamber and having outlet orifices, means for creating a rapidly combustible hydrogen-rich mixture of about 1.2 to 7 times stoichiometric in said pre-chamber, means for igniting the combustible mixture in the pre-chamber, said pre-chamber and said orifices being dimensioned to have a dimensionless throat parameter

$$\beta = \left( \frac{area\ of\ throat\ x\ bore\ of\ combustion\ cylinder}{pre-chamber\ volume} \right)$$

substantially falling within the range 0.3 to 0.8, characterised in that said pre-chamber has at least one pair and not more than two pairs of oppositely directed outlet orifices and the ignition device is oriented such that said at least one pair of outlet orifices are positioned such that their ignition jets are directed along a first line extending between the inlet and exhaust valves in the chamber, thereby promoting efficient combustion within the combustion chamber, and the second pair of outlet orifices, when present, are positioned such that their ignition jets are directed along a second line, the second line extending transverse to said first line.

By the use of the above ignition device, and particularly by selection of the dimensionless throat parameter β within the above range, by the use of the hydrogen-rich mixtures defined above, and by the use of at least one pair and not more than two pairs of oppositely directed outlet orifices, idle combustion variability is nearly eliminated, even at lean burn operation. At the same time, low levels of emissions are obtained and unthrottled operation is possible with some sacrifice in efficiency, but with near zero NOx emissions.

The volume of the pre-chamber is preferably as small as is practically possible, the lower limit of chamber volume being dictated largely by the ability to physically form the pre-chamber. Pre-chamber volumes of about 0.5% have been achieved with difficulty, while pre-chamber volumes of about 0.7% have been readily achieved and offer the advantage of being capable of location within the diameter of a standard spark plug connecting portion.

In a preferred form of the invention, the ignition device is formed with at least two outlet orifices connected by angularly extending passages to a conical inlet passage. The outlet passages preferably extend in opposite directions from the narrow end of the inlet orifice and are preferably centered on a diameter of a body in which the orifices and passages are formed. An orifice arrangement of this sort has a dimensionless throat parameter β of about 0.7.

In use, the orifices are positioned within a combustion chamber having two inlet valves and two exhaust valves in such a manner that the ignition jets issuing from the orifices are directed across the ridge of the pent roof of the chamber between the pairs of inlet and exhaust valves, preferably as further described in greater detail below.

In another embodiment, suitable for engines with a narrow angle (e.g. 0-15°) between the inlet and exhaust valves, the ignition device is formed with four outlet orifices arranged in pairs extending in opposite directions and spaced at about 90° to each other. The orifices are connected by angularly extending passages to a conical inlet passage, and again the dimensionless throat parameter β of this orifice arrangement is about 0.7.

While in each of the above embodiments the provision of a conical inlet passage is preferred to reduce heat losses, the use of a cylindrical inlet passage is acceptable.

While the availability of hydrogen as a fuel source for combustion within a pre-chamber is known from the Gussak paper referred to above and from other sources, the ability to significantly reduce the size of the pre-chamber as defined above has not been recognized before the present invention. Of course, the ability to reduce the size of the pre-chamber not only enables the pre-chamber to be incorporated into a modified spark plug having standard attachment dimensions, but also significantly reduces the total heat losses during the combustion process thereby resulting in surprising improvements in lean mixture combustion and consequential reductions in NOx emissions. Until the present invention, it was always expected that a pre-chamber volume at least as large as that stated by Gussak to provide optimization of pre-chamber combustion would be necessary and that chemically correct hydrogen mixtures close to stoichoimetric should be present in the pre-chamber to form the necessary torch ignition to achieve the expected benefit from this process. It was surprisingly determined that significantly smaller volumes could be used without compromising the effectiveness of the ignition jet of burning gas produced from the pre-chamber combustion process. It has also been surprisingly determined that by selecting an orifice throat size β between about 0.3 and 0.8 and by having oppositely directed orifices, engine efficiency is maximised for lean burning mixtures. Similarly, by ensuring that a hydrogen-rich combustible mixture is present in the pre-chamber, the burning rate of the combustible mixture in the combustion chamber of the engine will be significantly enhanced and nox emissions reduced.

The large surface area to volume ratio of the pre-chamber ensures that the residual gas in the pre-chamber is at low temperature, a requirement for low NOx emission from this region as the gas expands into the main chamber during expansion. The jets of combustion products, at sonic or near sonic velocity from the small volume of the pre-chamber, into the main chamber hydrocarbon fuel initiates a distributed reaction in an ultra lean mixture, which can be much leaner than the normal lean flammability limit. The distributed reaction is triggered by the presence of chemically active species in the jet and allows nearly spatially homogeneous burning with excellent repeatability and hence close to spatially uniform temperatures. Along with the ability to use ultra lean mixtures this process avoids the higher temperatures found in the region of the first burned gas in the spark ignition engine in the region of the spark plug or in the richer mixture around the fuel jet in the diesel engine which are the source of high NOx emissions.

The hydrogen fuel may be introduced to the pre-chamber from a suitable source or may be produced in-situ within the pre-chamber by catalysis. The ten times faster flame speed of hydrogen compared with hydro-carbon fuels substantially reduces the variation in the time for ignition kernel growth, thus virtually eliminating CBCV in combustion under idle and light load conditions. This permits the burning of lean mixtures in the main chamber; the mixtures may be so lean that throttling may be eliminated whereby thermal efficiency increases and NOx emissions reduced by as much as three orders of magnitude.

The pre-chamber may be formed as part of a replacement spark plug, or may be formed as part of the cylinder head in the region of the spark plug receiving opening. The means for igniting the combustible mixture may comprise a miniature spark plug, or some other form of spark generating means formed integrally with the means for introducing hydrogen into the pre-chamber.

The invention also provides a method of operating an internal combustion engine having at least one combustion chamber having two inlet valves and two exhaust valves, comprising the steps of introducing a rapidly combustible hydrogen-rich mixture of about 1.2 to 7 times stoichiometric into a pre-chamber of an ignition device associated with a combustion chamber of the engine and having a volume substantially falling within the range 0.5% to less than 2% of the combustion chamber clearance volume, said ignition device having outlet orifices having a dimensionless throat parameter

$$\beta = \left( \frac{\textit{area of throat x bore of combustion cylinder}}{\textit{pre} - \textit{chamber volume}} \right)$$

substantially falling within the range 0.3 to 0.8, and igniting the mixture in the pre-chamber to create ignition jets which issue from said outlet orifices, characterised by the step of providing at least one pair and not more than two pairs of oppositely directed outlet orifices from said pre-chamber from which ignition jets issue in opposite directions, said at least one pair of outlet orifices being positioned to direct said ignition jets along a first line extending between said inlet and exhaust valves in the chamber thereby promoting efficient combustion within the combustion chamber and the second pair of outlet orifices, when present, are positioned such that their ignition jets are directed along a second line, the second line extending transverse to said first line.

## BRIEF DESCRIPTION OF THE DRAWINGS

In order that the invention may be more readily understood several embodiments of the invention will now be described with reference to the accompanying drawings in which:

Figure 1 shows schematically an ignition device according to a first embodiment of the invention;

Figure 2 schematically shows an ignition device according to a second embodiment of the invention;

Figure 3 schematically shows a third embodiment of the invention;

Figure 3a is a graph showing changes in indicated thermal efficiency with various valves of the dimensionless throat parameter $\beta$;

Figure 4 is a sectional elevation of an ignition device according to a test prototype, and

Figures 4A and 4B are corresponding schematic sectional elevations and end elevations of throat inserts having more preferred outlet orifice configurations;

Figure 4C is a schematic representation of the initial flame development using the throat insert of Figure 4A;

Figure 5 is a graph showing the variation on specific HC, CO and Nox emissions with variations of specific work with hydrogen at about 0.8% methanol by mass, injected at 90° crank angle BTDC at $\gamma = 9$;

Figure 5A is a graph showing variations in Nox emissions with engine power as work/cycle for normal ignition and for the case of the invention,

Figure 6 is a graph showing the variation of HC, CO and NOx emissions with pre-chamber H2 injection timing at optimum efficiency mixtures of $\lambda = 2.1$, 1.98 and 1.6 at full, half and quarter throttle respectively;

Figure 7 is a graph showing the effect of the amount of pre-chamber H2 injection on efficiency and spark advance at the same optimum efficiency mixtures and throttle settings referred to in relation to Figure 6;

Figure 8 is a graph showing the variation of COV of specific work per cycle with amount of pre-chamber H2 injection at the same optimum efficiency mixtures and throttle settings;

Figure 9 is a graph showing the variation of COV of peak pressure with amount of pre-chamber H2 injection at the same optimum efficiency mixtures and throttle settings;

Figure 10 is a graph showing the effect of increasing compression ratio on indicated thermal efficiency for standard ignition and hydrogen assisted jet ignition, and

Figure 11 is a graph showing indicated changes in indicated thermal efficiency with engine power as work/cycle for normal ignition, and for the invention with increased compression ratio.

## DESCRIPTION OF PREFERRED EMBODIMENTS

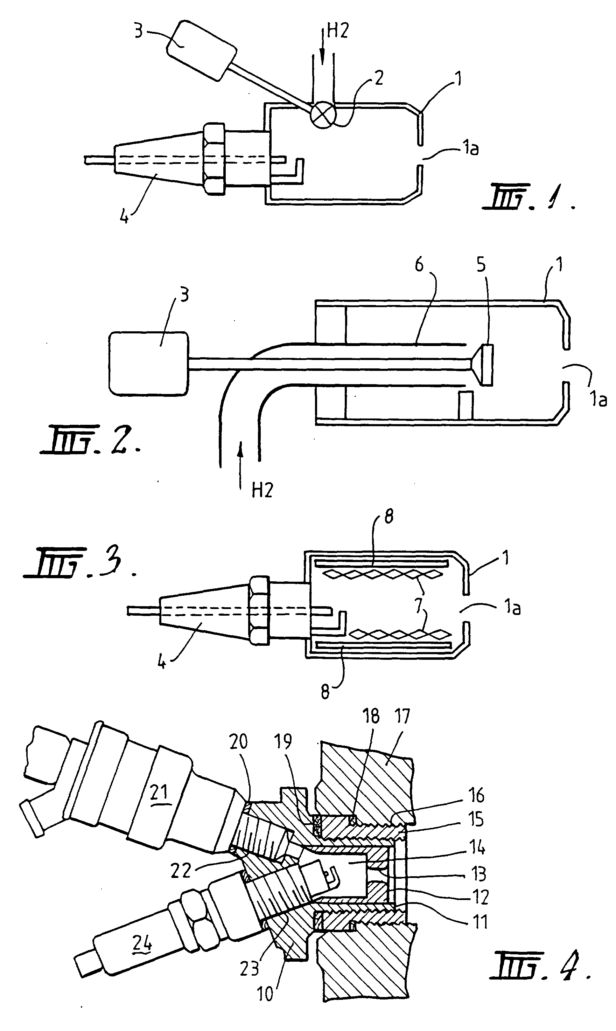

Hydrogen or reformed fuel containing a high proportion of hydrogen is made in or introduced into a pre-chamber of a volume so small that it may be formed in the spark plug. Examples of possible design configurations are shown in Figs 1 to 3.

Figure 1 shows the arrangement whereby the hydrogen gas is introduced into a pre-chamber 1 having an outlet orifice la by a small valve 2 operated by a valve driver 3 and the mixture ignited by a miniature spark plug 4. Low pressure delivery (about four atmospheres) of hydrogen is used in each of the embodiments of Figures 1, 3 and 4, so that the pressure of hydrogen delivery is not greater than the fuel supply pressure to the combustion chamber.

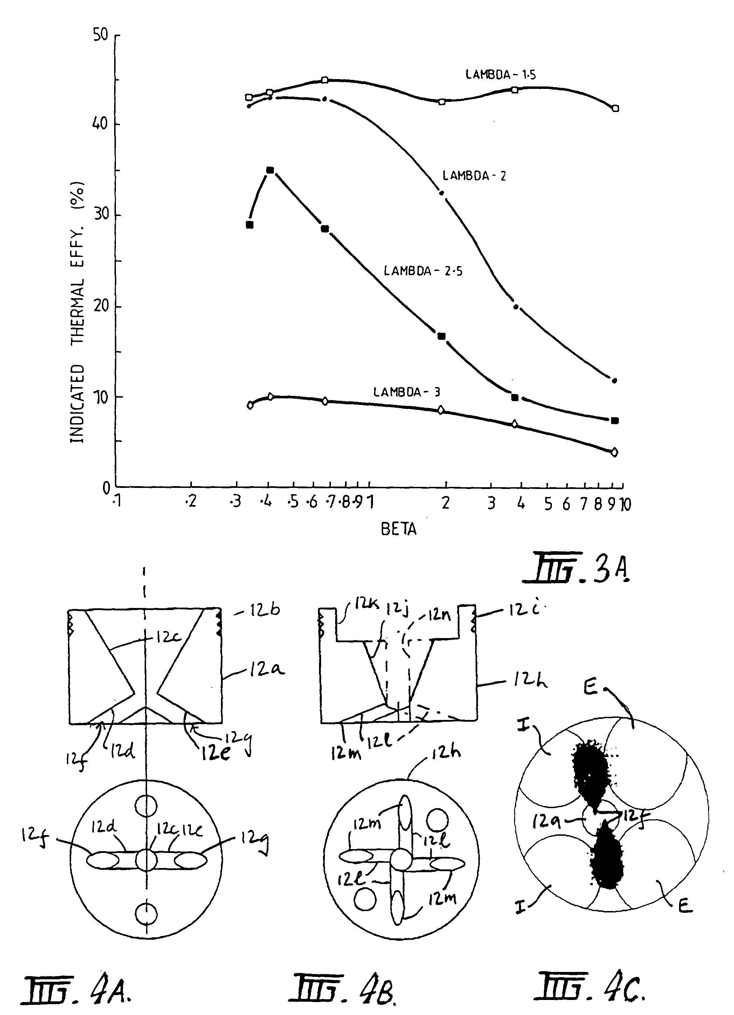

Figure 2 shows an arrangement in which the spark plug central electrode is constituted by the hydrogen admission valve 5 which defines a spark gap within the gas inlet 6 when the valve is open one unit serving both functions. In this case the hydrogen may be supplied from storage vessels or by the reformation of small amounts of fuel outside the pre-chamber. The hydrogen may be contaminated by the products of reformation.

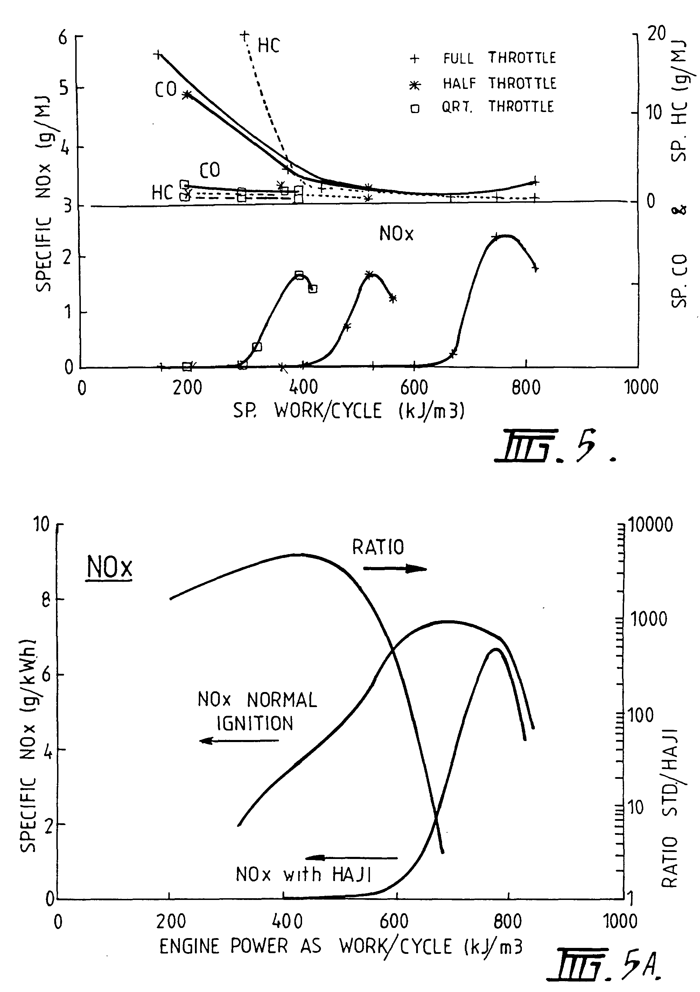

Figure 3 shows a schematic of the pre-chamber in which the hydrogen is generated by a reforming catalyst 7, the rate of reformation and thus the amount of hydrogen produced being controlled by the catalyst bed temperature, which here is illustrated by means of electrical heating means 8 under control of an engine management computer (not shown). In this case, if the amount of fuel within each cylinder is insufficient to produce a greater than stoiciometric hydrogen mixture, and the effectiveness of the hydrogen assisted jet ignition system is reduced thereby, additional hydrocarbon fuel may be introduced into the pre-chamber to form a hydrogen-rich mixture, or small amounts of hydrogen can be directly injected to supplement the hydrogen produced by catalysis.

The invention is applicable to both four and two-stroke engines.

The amount of hydrogen introduced or reformed fuel produced by catalysis may be varied but small amounts of the order of 0.5 to 2% by mass have been found to produce acceptable results. The mixture in the pre-chamber should be greater than stoiciometric and from 1.2 to 7 times stoiciometric or higher is acceptable, with 3 times constituting a reasonable median value. The ten times faster flame speed of hydrogen compared with hydrocarbon fuels substantially reduces the variation in the time for ignition kernel grown and thus virtually eliminates cycle-by-cycle variation in combustion under idle and light load conditions. The exodus of the partially combusted hydrogen and hydrocarbon fuel in the pre-chamber provides a jet of enthalpy and reacting products which cause the fuel-lean main chamber products to burn at much lower temperatures and stoichiometry than is possible with a localized ignition source.

The burning of a lean mixture in the main chamber may be sufficiently lean that throttling may be eliminated and thus thermal efficiency increased by eliminating pumping work and nitrogen oxide emissions reduced by as much as two orders of magnitude by the more uniform low temperature combustion.

Further, because combustion of the mixtures needed for maximum power is so fast the onset of knock is delayed and compression ratios may be increased, thus increasing both power output and efficiency.

The volume of the pre-chamber will be less than 2% of the main combustion chamber volume, and may be as low as 0.5%. This is significantly smaller than prior art pre-chambers, eg VW, at 17% and Gussak at 2 to 3%. The number of pre-chamber orifices 1a, orifice throat shape and their direction with respect to the main chamber may be varied and optimized for a particular engine configuration. These parameters are chosen to ensure that the ignition jet or jets issuing from the orifice(s) penetrate the combustion chamber of the engine to such an extent as to maximize efficient combustion. Sharp edges should be avoided when forming the orifice 1a. By correctly choosing the above parameters, the ignition jet penetrates to a position approximately coincident with the centre of the cylinder, and ignition is then found to be extremely regular. To ensure a jet ignition gas stream is achieved, the orifice should have a dimensionless throat

$$\text{parameter } \beta = \frac{\text{area of throat x bore of combustion cylinder}}{\text{pre-chamber volume}}$$

falling within the range about 0.3 to 0.8.

In this regard reference is made to Figure 3a, which details test results of various pre-chamber orifices, described by the dimensionless throat parameter β "beta". The engine on which the tests were carried out was the Wakesha Cooperative Fuel Research Engine (CFR) used for octane rating petrols. The engine was operated at 600 rev/min, the speed used for the research octane number determination. Ignition timing was set at the minimum advance for best torque (MBT) in all cases, the compression ratio was at 9:1 and the fuel supplied to the main chamber was petrol. All tests were at wide open throttle (WOT). The relative air/fuel ratio (to a base of the stoichiometric air/fuel) "lambda", sometimes known as the excess air fuel ratio, and is the abscissa for the graphs. The indicated thermal efficiency, the ordinate of the graphs, is based on the net (lower) heating value of the fuel. It is clear from the results that the throat size "beta" should preferably be in the range of about 0.4 to 0.7 for optimum thermal efficiency, although the range 0.3 to 0.8 provides acceptable efficiency.

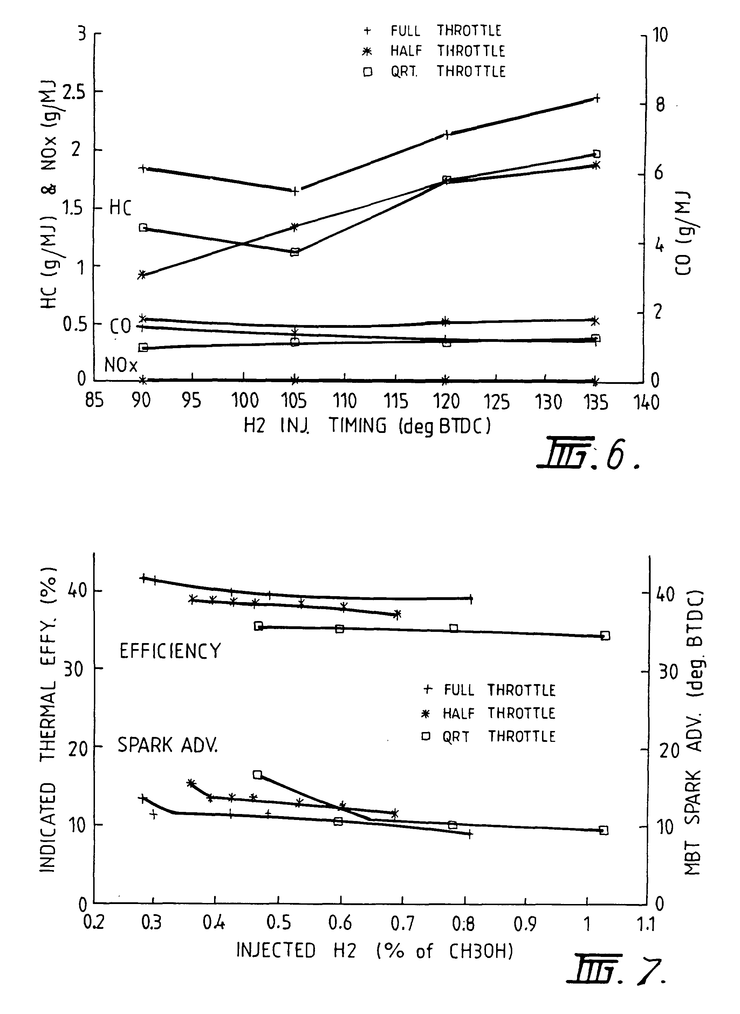

Figure 4 shows an experimental ignition device embodying the invention which has been subjected to testing using a high speed, single cylinder CFR engine burning methanol fuel. The ignition device comprises a body 10 having a cylindrical portion 11 within which a throat insert 12 having an outlet orifice 13 of about 1.5mm diameter received to define a pre-chamber 14 having a volume of about 0.7cc. This yields a throat parameter β of about 0.4. The cylindrical portion 11 threadably engages an adaptor 15 which in turn threadably engages the spark plug opening 16 in the cylinder head 17 of the engine. Gaskets 18, 19 and 20 are positioned to seal the adaptor 16 to the cylinder head 17 and the body 10 to the adaptor 16, while the gasket 20 seals a hydrogen gas injector 21 in an injector opening 22 formed in the body 10. A spark plug receiving opening 23 in the body 10 receives a spark plug 24, the electrodes of which project into the pre-chamber 14.

Referring now to Figures 4A and 4B, two preferred outlet orifice configurations are shown in which the single orifice 13 shown in Figure 4 is replaced by more sophisticated multiple orifice configurations producing improved results.

In the arrangement of Figure 4A, which is part of an ignition device designed to replace a standard spark plug in a four valve per cylinder engine (such as a 2.0L capacity Lancia engine), throat insert 12a is threaded at 12b for engagement with the body portion 11 of the ignition device of Figure 4, or a suitable spark plug replacement device (not shown), and is formed with a conical inlet passage 12c leading to two angular outlet passages 12d and 12e which terminate in oval outlet orifices 12f and 12g. Also shown in the end elevation are two blind holes for assembly purposes. The conical inlet passage 12c is preferred to reduce heat losses in the ignition jet, but a cylindrical passage still produces acceptable results. The dimensionless throat parameter β of this orifice arrangement is about 0.7 (the area of throat in the formula for β being replaced by total throat area).

The angles of the conical inlet passage 12c and the outlet passages 12d and 12e are not critical and are dictated principally by the dimensions of the insert 12a and the spacing of the orifices 12f and 12g. However, the outlet orifices 12f and 12g are preferably positioned on a diameter of the insert 12a to enable their orientation along a line which directs their ignition jets across the ridge of the pent roof of the combustion chamber between the pairs of inlet and exhaust valves, as shown schematically in the initial flame development diagram of Figure 4C. In this diagram, the outlet orifices are shown to be slightly offset, and such an arrangement can be adopted if desired. In Figure 4C, the inlet valves are identified by I and the exhaust valves are identified by E.

In this arrangement, it was found that at $\lambda = 1.0$ the coefficient of variation in indicated mean effective pressure (COV IMEP), an important measure of combustion variability, was reduced from 7% for standard spark ignition to 3% and hydrocarbon (HC) emissions were reduced by 10%. At $\lambda = 1.5$ a 50% reduction in HC emissions was achieved and CO and NOx were nearly eliminated in line with previous experience with the single jet configuration. Fuel efficiency improved by up to 30% under most load conditions.

In the less preferred embodiment of Figure 4B, which is suitable for engines with a narrow angle (e.g. 0-15°) between the inlet and exhaust valves, the throat insert 12h is again threaded at 12i and a conical inlet passage 12j leads from an initial cylindrical passage 12k. Four outlet passages 121 extend from the end of the passage 12j to form oval outlet orifices 12m arranged as shown on mutually perpendicular diameters of the insert 12h.

Shown in broken outline in Figure 4B is the alternative cylindrical inlet passage 12n, which is not as effective as the conical passage due to greater cooling effects, but nevertheless produces acceptable results.

If desired, the pre-chamber may be formed within the cylinder or as an attachment to the cylinder, although these options are less attractive than forming the pre-chamber in a spark plug body.

The tests conducted using the above described prototype, referred to in the following description as the hydrogen assisted jet ignition (HAJI) system, relate to an engine speed of 600 r/min for two reasons : first, it is at low speed, low loads that combustion variability is most noticeable as engine surge under load or vibration at idle; second, this is the speed for research octane number (RON) measurement. Thus, the effects of the ignition system on the octane requirement, or more specifically, the highest usable compression ratio as a surrogate for octane number, may be identified.

A wide range of parameters may be employed to describe variability in engine combustion. These may be related to the cylinder pressure, p, the magnitude or the phasing of pressure characteristics such as peak p or maximum value of dp/dt or the cycle integral value of pressure ($w_c$). Two measures are used here: the coefficient of variation in peak cylinder pressure, COVp^ (standard deviation/mean) and the coefficient of variation of the indicated specific work (or i.m.e.p.) per cycle, $COVw_c$. Fluctuations in the former influence the maximum structural reactive forces and peak cycle temperatures and in the latter, variability in the indicated thermal efficiency $\eta_I$. The indicated value of $w_c$ is selected rather than the brake value, as the mechanical efficiency of the 'high speed' CFR engine is unusually low because of its balancing pistons and belt drive arrangement. Emissions of HC, CO and NOx are also presented on an indicated specific basis i.e. g/MJ.

The experimental data space has been limited in this presentation to: main chamber mixture composition expressed as $\lambda$, the relative air/fuel ratio; three manifold air pressures, 95, 73 and 50 kPa, described as full, half and a quarter throttle, respectively; hydrogen injection timing, $\theta_{H2}$; hydrogen injection quantity expressed as a proportion of the fuel mass supplied, $M_{H2}$ and compression ratio, r. The spark timing $\theta_{ign}$ was always adjusted for the minimum advance for best torque (MBT); and the main chamber injection timing was at maximum inlet valve lift (98°ATDC) for optimum efficiency in the CFR engine.

The effect of changing the main chamber fuel composition for the range of $\lambda = 1$ to 3.5 for full throttle and smaller ranges at part throttle was studied. Even at full throttle it was possible to reduce the work per cycle $w_c$ (and the torque) to no load quantities by increasing the relative air/fuel ratio, whereas the lean limit for this engine with normal ignition is shown to occur at $\lambda = 1.64$, there exists no lean limit with hydrogen assisted jet ignition, HAJI, within the usable range of $w_c$. However, it was observed that there is some advantage in throttling the engine as at the smallest values of $w_c$ the thermal efficiency, $\eta$ is higher at a quarter throttle. The peak thermal efficiency $\eta$ is about two percentage points higher with HAJI over the standard system.

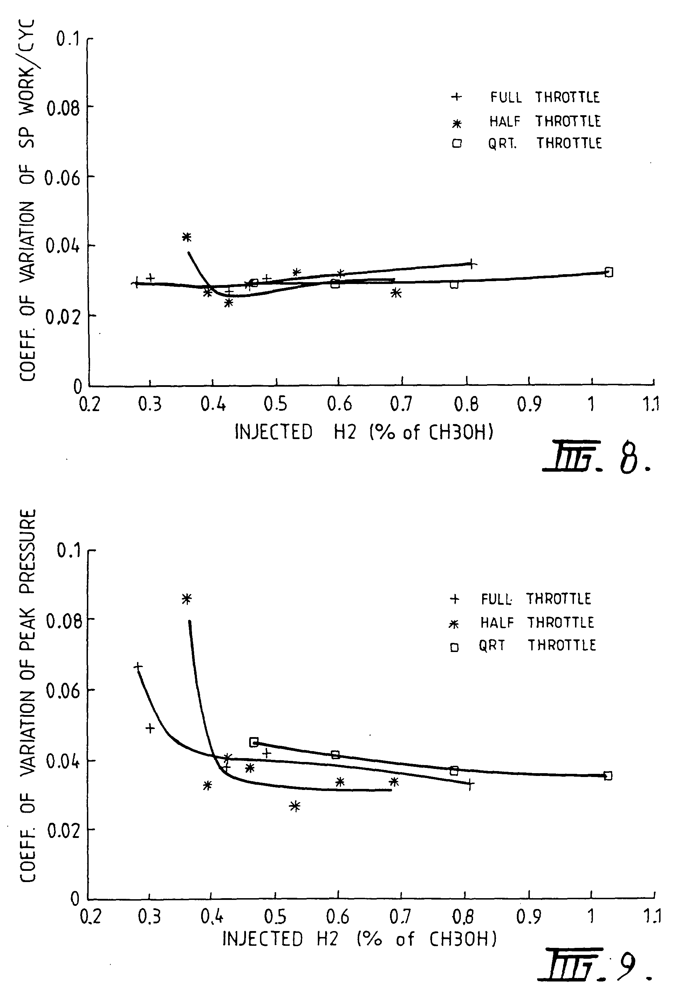

The range of ignition timing needed for operation from full to no load ($w_c$ - 820 to 180 kJ/m$^3$) was found to be small and retarded compared with conventional ignition. At full load $\theta_{ign}$ is after TDC. For all operating conditions as seen in the COVp^ was found to be very low and rising only slightly at the lowest values of $w_c$ at full and half throttles. Usually under light load, this engine has a COVp^ of about 0.2, with the standard ignition system. Whilst there exists substantially regular burning to peak pressure, the $COVw_c$ variations in the later burning phases of mixtures leaner than those for maximum $\eta$ are observable. The failure to burn all of the main chamber fuel, at least in some cycles, is evidenced by an upturn in specific HC and CO emission at full and half throttle as observed in Fig. 5.

The benefits from leaner operation, well beyond the standard engine's lean limit, is evidenced in Fig. 5 where a substantial range of operation at specific NOx values of 0.03 g/MJ or much less than one hundredth of the peak NOx. Under these conditions the exhaust NOx concentrations are less than 1 ppm. The variation in NOx emissions with engine power from the invention and for standard combustion is illustrated in Figure 5A.

At full throttle these low values of NOx are obtained at $w_c$ less than 600 kJ/m$^3$ (i.e. for values of torque less than 70% of the maximum) a point at which the HC and CO are comparatively low and the $\eta$ for $w_c$ = 530 kJ/m$^3$, $\lambda$ = 2.15 is a maximum of 40%. Maximum efficiency at half and quarter throttles also correspond with very low NOx values and the advantage of throttling lies in avoiding the falling efficiency at full throttle when $\lambda > 3$ and the reduced exhaust HC and CO under light load ($w_c$) conditions.

Very small quantities of hydrogen were injected into the pre-chamber to obtain the very low NOx and high $\eta$ demonstrated in Fig. 5. The sensitivity to pre-chamber $H_2$ injection timing (influencing mixing time) and quantity (influencing stoichiometry) have been investigated.

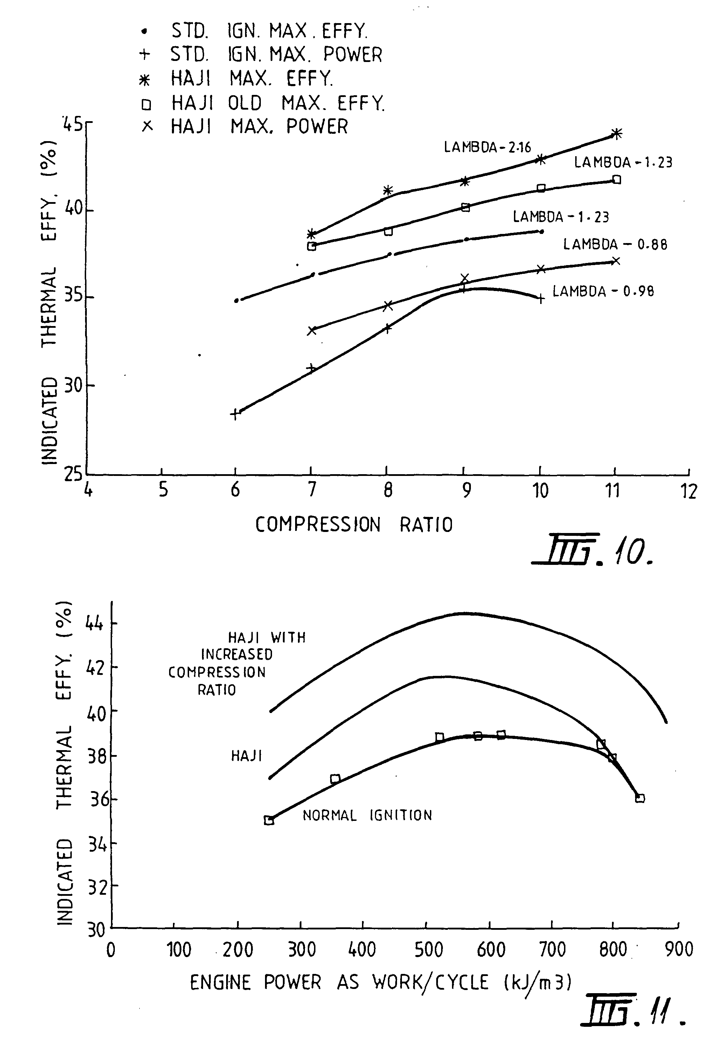

The sensitivity of the engine's performance to $H_2$ injection timing for the mixture corresponding to maximum efficiency at each throttle position was also considered and it was found that $\eta$ is independent of timing at full throttle but there is a small advantage (an increase of 2% in $\eta$) at part throttle by using about 100° BTDC injection timing. More advanced injection requires slightly more advanced spark timing (but very much less than that of the standard engine which is 38° BTDC at a quarter throttle, for example). The combustion variability as $COVw_c$ varies slightly with injection timing, but at advanced timing and half throttle, $COVw_c$ is nearly twice that at full throttle. This trend is even more evident in $COVp^\wedge$ where minima occur close to the timing of 100° BTDC. There is a trend also for both HC and CO emissions (Fig. 6) to minimise with increasing CO and HC.

The effects of changing the pre-chamber $H_2$ quantity are demonstrated in Figs. 7 to 10. In Fig. 7 there is a tendency for $\eta$ to increase slightly with reducing quantities of injected $H_2$. The ignition timing (Fig. 7), $COVw_c$ (Fig. 8) and $COVp^\wedge$ (Fig. 9) indicate that for each throttle opening a point is reached at which combustion variability increases and more advance is needed to compensate. This is consistent with previous findings using conditional sampling of the exhaust from fast and slow burn cycles. Corresponding with the increases in variability are increases in HC and some increase in CO emissions.

A further benefit from the changed ignition system is the increase in highest usable compression ratio, HUCR. In Fig. 10 the thermal efficiency $\eta$ for the standard ignition system is shown at maximum efficiency ($\lambda = 1.23$) and maximum power ($\lambda = 0.98$) mixtures, and the corresponding values ($\lambda = 2.15$) and ($\lambda = 0.98$) with the HAJI system. In addition the value of $\eta$ at 'old max effy' $\lambda = 1.23$ with the HAJI system is also included for comparison at equal $\lambda$.

With standard ignition, peak efficiency at maximum power mixture, $\lambda = 0.90$ occurs at r = 9. At r = 10, $\eta$ falls because knock is encountered. The HAJI system at r = 9, and with $\lambda = 1.23$, the optimum for maximum $\eta$ with standard ignition, shows nearly 2% absolute (or 5% relative) increase in $\eta$. This increase is considered to be a consequence of the faster burn rate and the improved combustion variability reducing the overall consequences of the combustion time loss. Further increase in $\lambda$ to increase efficiency (to $\lambda = 2.16$) is possible and allows an increase of nearly 2% more in $\eta$. Moreover, because of the reduced variability and faster burn times Fig. 10 shows that r can be increased to 11. At r = 12, knock is encountered at maximum power mixture. At r = 11 and $\lambda = 2.16$, there is a further increase in $\eta$ of 3%. The total improvement in maximum efficiency of just over 6% absolute represents a relative increase of 15% in $\eta$. The improvement in engine power achieved by the invention with increased compression ratio is illustrated in Figure 11.

The indication that the HAJI can support conventionally port-injected s.i. engine combustion at mixtures leaner than those reported in the literature is exemplified at 1200 rev/min engine speed, where $COVp^\wedge$ of less than 0.05 can be sustained at $\lambda = 4.5$. The quantity of hydrogen needed to sustain such operation is about one tenth that which would be needed if added homogeneously mixed with the fuel. There is some evidence of increased variability which might be associated with partial burns in the ultra lean mixtures as the $COVw_c$ increases to values associated with standard ignition. However, the increases in HC and CO emission under the full and half throttle conditions are attributed to the thickening of the wall quench layers and reduced oxidation of the hydrocarbons in the substantial crevices of the CFR engine piston. The benefit from throttling in reducing the HC and CO is the result of the increased fraction of hot residuals in the charge, increasing the cycle temperatures as evidenced by the twofold increase in NOx from 0.6 to 1.2 ppm as the throttle is reduced from full to one quarter.

The reason for the optimum $H_2$ injection timing occurring quite late in the compression process (i.e. at 100° BTDC) is , with earlier injection, that the lower cylinder pressures allow hydrogen to flow into the main chamber. It is important to note that if there is no outflow of hydrogen, the pre-chamber will be fuel rich for all the reported values of injected $H_2$. The increase in $COVp^\wedge$ (Fig 9) at low $H_2$ values may be the result of injector variability as it approached its minimum open time of 2 ms. The extremely wide rich flammability limits of hydrogen appear to render the process moderately insensitive to the amount of injected $H_2$.

Our test results showed that MBT spark timing was after TDC for maximum power mixture. This is an unexpected result because, as the burn rate approaches that of the Otto cycle's constant volume combustion, equal distribution of the burn process around TDC would be expected to maximize the cycle work.

The above demonstration of the CFR engine, working at up to 70% maximum torque with NOx emissions close to ambient levels, is most encouraging finding as extrapolation of these research engine data to automobile application would remove the requirement for stoichiometric operation needed for the '3-way' catalyst. The hydrogen assisted jet ignition used to achieve this also confers extremely stable combustion with COV's of peak cylinder pressure and specific work per engine cycle reduced by 50 to 80% of that normally achieved with this engine, allowing increased thermal efficiency at ultra lean operation, at relative air/fuel ratios of around 2, and about two numbers increase in the highest useful compression ratio. The result is an improvement in maximum indicated thermal efficiency of about 15% simultaneously with the low NOx emissions. The hydrocarbon emissions remain high and if realized in automotive engines would require after engine clean up.

Near elimination of idle combustion variability by our novel form of "jet"ignition using a small amount of hydrogen addition has been achieved. At the same time low levels of emissions have also been observed. Idle stability will improve vehicle driveability whilst cruising at low engine speeds and high gears when the engine operates near idle speed. In addition reduced emissions will be obtained during vehicle deceleration.

The following conclusions can be drawn from our results:

1. In a conventional ignition system, the cycle-by-cycle variability (CBCV) is initiated in the growth of the ignition kernel, subsequent to spark, during the period when the flame kernel grows to about the scale of the largest eddies. Three classifications of flame kernels were made, namely (a) stationary kernels, (b) translating kernels and (c) splitting kernels. Subsequent slow burning with stationary kernels has been seen while other types of kernels subsequently have fast burning.

2. A novel way of controlling combustion variability for a large range of equivalence ratios in the S.I. engine has been obtained with jet ignition using small amounts of hydrogen addition. At the same time improvement in efficiency and significant reduction in emissions are obtained. A major outcome is that CBCV is not increased with lean mixtures, which is different from that occurring in the conventionally ignited S.I. engine.

3. Unthrottled operation of the S.I. engine with near elimination of NOx emission is possible with this novel method at some sacrifice in efficiency.

4. Idle combustion variations have been nearly eliminated together with low level of emissions.

**Claims**

1. A combustion engine having at least one combustion chamber having two inlet valves and two exhaust valves, an ignition device associated with said combustion chamber including a small pre-chamber having a volume substantially falling within the range 0.5% to less than 2% of the clearance volume of the combustion chamber and having outlet orifices, means for creating a rapidly combustible hydrogen-rich mixture of about 1.2 to 7 times stoichiometric in said pre-chamber, means for igniting the combustible mixture in the pre-chamber, said pre-chamber and said orifices being dimensioned to have a dimensionless throat parameter

$$\beta = \left( \frac{area\ of\ throat\ x\ bore\ of\ combustion\ cylinder}{pre-chamber\ volume} \right)$$

substantially falling within the range 0.3 to 0.8, characterised in that said pre-chamber has at least one pair and not more than two pairs of oppositely directed outlet orifices and the ignition device is oriented such that said at least one pair of outlet orifices are positioned such that their ignition jets are directed along a first line extending between the inlet and exhaust valves in the chamber, thereby promoting efficient combustion within the combustion chamber, and the second pair of outlet orifices, when present, are positioned such that their ignition jets are directed along a second line, the second line extending transverse to said first line.

2. The combustion engine of claim 1, wherein said combustion chamber includes a pent roof having a ridge extending between the inlet and exhaust valves, said ignition device being oriented along a line which directs the ignition jets across the ridge of the pent roof between the pairs of inlet and exhaust valves.

3. The engine of claim 1 or 2, wherein the volume of the pre-chamber is greater than about 0.5% and less than about 0.8% of the volume of said combustion chamber.

4. The engine of claim 1, 2 or 3, wherein the dimensionless throat parameter of said orifices is about 0.4 to 0.7.

5. The engine of any one of claims 1 to 4, wherein the hydrogen rich mixture is about 3 times stoichiometric.

6. The engine of any one of claims 1 to 5, wherein the pre-chamber is formed as part of a structure which is adapted to engage the standard spark plug opening of an internal combustion engine.

7. The engine of claim 6, wherein said pre-chamber forms part of a spark plug structure.

**8.** The engine of any one of claims 1 to 7, wherein said means for creating combustible mixture in said pre-chamber comprises means for injecting fuel containing hydrogen, into said pre-chamber.

**9.** The engine of any one of claims 1 to 8, wherein said pre-chamber includes a reforming catalyst and heating means for generating a rapidly burning hydrogen mixture within said pre-chamber.

**10.** The engine of any preceding claim wherein said ignition device has a single pair of orifices, wherein said pair of orifices are arranged on a diametrical axis of said ignition device.

**11.** The engine of claim 10, wherein said outlet orifices include an inlet passage leading to a pair of outlet passages terminating in said pair of outlet orifices.

**12.** The engine of claim 11, wherein said outlet passages extend angularly from the inlet passage to the outlet orifices.

**13.** The engine of any one of claims 11 or 12, wherein said inlet passage is of inverted conical configuration.

**14.** The engine of any preceding claim, comprising two pairs of outlet orifices in oppositely directed pairs.

**15.** The engine of claim 14, wherein said pairs of orifices are each arranged on a diametrical axis and said axes are mutually perpendicular.

**16.** The engine of any one of claims 8 to 15, wherein the outlet orifices are oval in shape.

**17.** A method of operating an internal combustion engine having at least one combustion chamber having two inlet valves and two exhaust valves, comprising the steps of introducing a rapidly combustible hydrogen-rich mixture of about 1.2 to 7 times stoichiometric into a pre-chamber of an ignition device associated with a combustion chamber of the engine and having a volume substantially falling within the range 0.5% to less than 2% of the combustion chamber clearance volume, said ignition device having outlet orifices having a dimensionless throat parameter

$$\beta = \left( \frac{area\ of\ throat\ x\ bore\ of\ combustion\ cylinder}{pre - chamber\ volume} \right)$$

substantially falling within the range 0.3 to 0.8, and igniting the mixture in the pre-chamber to create ignition jets which issue from said outlet orifices, characterised by the step of providing at least one pair and not more than two pairs of oppositely directed outlet orifices from said pre-chamber from which ignition jets issue in opposite directions, said at least one pair of outlet orifices being positioned to direct said ignition jets along a first line extending between said inlet and exhaust valves in the chamber thereby promoting efficient combustion within the combustion chamber and the second pair of outlet orifices, when present, are positioned such that their ignition jets are directed along a second line, the second line extending transverse to said first line.

**18.** The method of claim 17, wherein said combustion chamber includes a pent roof having a ridge extending between the inlet and exhaust valves, said ignition device being oriented along a line which directs the ignition jets across the ridge of the pent roof between the pairs of inlet and exhaust valves.

**19.** The method of claim 17 or 18, wherein the combustion engine is as claimed in any one of claims 2 to 16.

**Patentansprüche**

**1.** Verbrennungsmotor mit wenigstens einer Verbrennungskammer mit zwei Einlassventilen und zwei Auslassventilen, einer Zündvorrichtung, die mit der Verbrennungskammer verbunden ist und eine kleine Vorkammer mit einem Volumen einschließt, das im Wesentlichen im Bereich von 0,5% bis weniger als 2% des Totraumvolumens der Verbrennungskammer liegt, und die Auslassöffnungen aufweist, einer Einrichtung zum Erzeugen eines schnell brennbaren, an Wasserstoff reichen Gemischs mit ungefähr dem 1,2- bis 7-fachen der stöchiometrischen Menge in der Vorkammer, einer Einrichtung zum Zünden des brennbaren Gemischs in der Vorkammer, wobei die Vorkammer und die Öffnungen so bemessen sind, dass sie einen dimensionslosen Halsparameter aufweisen

$$\beta = \left( \frac{\text{Halsfläche} \cdot \text{Bohrung des Verbrennungszylinders}}{\text{Vorkammervolumen}} \right)$$

der im Wesentlichen im Bereich von 0,3 bis 0,8 liegt, **dadurch gekennzeichnet**, dass die Vorkammer wenigstens ein Paar und nicht mehr als zwei Paar einander entgegengesetzt gerichteter Auslassöffnungen aufweist und die Zündvorrichtung so ausgerichtet ist, dass das wenigstens eine Paar Auslassöffnungen so angeordnet ist, dass ihre Zündstrahlen in Richtung einer ersten Linie verlaufen, die sich zwischen den Einlass- und den Auslassventilen in der Kammer erstreckt, um so die wirkungsvolle Verbrennung in der Verbrennungskammer zu fördern, und das zweite Paar Auslassöffnungen, falls es vorhanden ist, so angeordnet ist, dass ihre Zündstrahlen in Richtung einer zweiten Linie verlaufen, wobei sich die zweite Linie quer zu der ersten Linie erstreckt.

2. Verbrennungsmotor nach Anspruch 1, wobei die Verbrennungskammer ein Pultdach mit einem First enthält, der sich zwischen den Einlass- und den Auslassventilen erstreckt und die Zündvorrichtung auf einer Linie ausgerichtet ist, durch die die Zündstrahlen über den First des Pultdachs zwischen den Paaren von Einlass- und Auslassventilen gerichtet werden.

3. Motor nach Anspruch 1 oder 2, wobei das Volumen der Vorkammer mehr als 0,5% und weniger als 0,8% des Volumens der Verbrennungskammer beträgt.

4. Motor nach Anspruch 1, 2 oder 3, wobei der dimensionslose Halsparameter der Öffnungen ungefähr 0,4 bis 0,7 beträgt.

5. Motor nach einem der Ansprüche 1 bis 4, wobei das an Wasserstoff reiche Gemisch ungefähr dem Dreifachen der stöchiometrischen Menge entspricht.

6. Motor nach einem der Ansprüche 1 bis 5, wobei die Vorkammer als Teil einer Struktur ausgebildet ist, die mit der Standard-Zündkerzenöffnung eines Verbrennungsmotors in Eingriff kommt.

7. Motor nach Anspruch 6, wobei die Vorkammer einen Teil einer Zündkerzenstruktur bildet.

8. Motor nach einem der Ansprüche 1 bis 7, wobei die Einrichtung zum Erzeugen eines brennbaren Gemischs in der Vorkammer eine Einrichtung zum Einspritzen von Kraftstoff, der Wasserstoff enthält, in die Vorkammer umfasst.

9. Motor nach einem der Ansprüche 1 bis 8, wobei die Vorkammer einen Reformingkatalysator und eine Heizeinrichtung enthält, um ein schnell brennendes Wasserstoffgemisch in der Vorkammer herzustellen.

10. Motor nach einem der vorangehenden Ansprüche, wobei die Zündvorrichtung ein einzelnes Paar Öffnungen aufweist und das Paar Öffnungen auf einer Diametralachse der Zündvorrichtung angeordnet ist.

11. Motor nach Anspruch 10, wobei die Auslassöffnungen einen Einlasskanal enthalten, der zu einem Paar Auslasskanäle führt, die in dem Paar Auslassöffnungen enden.

12. Motor nach Anspruch 11, wobei die Auslasskanäle sich schräg von dem Einlasskanal zu den Auslassöffnungen erstrecken.

13. Motor nach einem der Ansprüche 11 oder 12, wobei der Einlasskanal umgekehrt kegelförmig ist.

14. Motor nach einem der vorangehenden Ansprüche, der zwei Paare Auslassöffnungen in entgegengesetzt gerichteten Paaren umfasst.

15. Motor nach Anspruch 14, wobei die Paare von Öffnungen jeweils auf einer Diametralachse angeordnet sind und die Achsen senkrecht zueinander sind.

**16.** Motor nach einem der Ansprüche 8 bis 15, wobei die Auslassöffnungen oval geformt sind.

**17.** Verfahren zum Betreiben eines Verbrennungsmotors mit wenigstens einer Verbrennungskammer mit zwei Einlassventilen und zwei Auslassventilen, das die Schritte des Einleitens eines schnell brennbaren, an Wasserstoff reichen Gemischs mit ungefähr dem 1,2- bis 7-fachen der stöchiometrischen Menge in eine Vorkammer einer Zündvorrichtung, die mit einer Verbrennungskammer des Motors verbunden ist und ein Volumen hat, das im Wesentlichen im Bereich von 0,5% bis weniger als 2% des Totraumvolumens der Verbrennungskammer liegt, wobei die Zündvorrichtung Auslassöffnungen hat, die einen dimensionslosen Halsparameter

$$\beta = \left( \frac{\text{Halsfläche} \cdot \text{Bohrung des Verbrennungszylinders}}{\text{Vorkammervolumen}} \right)$$

aufweisen, der im Wesentlichen im Bereich von 0,3 bis 0,8 liegt, und des Zündens des Gemischs in der Vorkammer zum Erzeugen von Zündstrahlen umfasst, die an den Auslassöffnungen austreten, gekennzeichnet durch den Schritt des Bereitstellens wenigstens eines Paars und nicht mehr als zweier Paare entgegengesetzt gerichteter Auslassöffnungen aus der Vorkammer, aus denen Zündstrahlen in entgegengesetzten Richtungen austreten, wobei das wenigstens eine Paar Auslassöffnungen so angeordnet ist, dass die Zündstrahlen in Richtung einer ersten Linie verlaufen, die sich zwischen den Einlass- und den Auslassventilen in der Kammer erstreckt, um so die wirkungsvolle Verbrennung in der Verbrennungskammer zu fördern, und das zweite Paar Auslassöffnungen, falls es vorhanden ist, so angeordnet ist, dass ihre Zündstrahlen in Richtung einer zweiten Linie verlaufen, wobei sich die zweite Linie quer zu der ersten Linie erstreckt.

**18.** Verfahren nach Anspruch 17, wobei die Verbrennungskammer ein Pultdach mit einem First enthält, der sich zwischen den Einlass- und den Auslassventilen erstreckt, und die Zündvorrichtung auf einer Linie ausgerichtet ist, durch die die Zündstrahlen über den First des Pultdachs zwischen den Paaren von Einlass- und Auslassventilen gerichtet werden.

**19.** Verfahren nach Anspruch 17 oder 18, wobei der Verbrennungsmotor einem der Ansprüche 2 bis 16 entspricht.

**Revendications**

**1.** Moteur à combustion interne comportant au moins une chambre de combustion pourvue de deux soupapes d'admission et de deux soupapes d'échappement, un dispositif d'allumage associé à ladite chambre de combustion comportant une petite chambre de précombustion avec un volume situé sensiblement dans la plage de 0,5 % à moins de 2 % du volume de la chambre de combustion, et comportant des orifices de sortie, des moyens pour produire un mélange riche en hydrogène et à combustion rapide qui est 1,2 à 7 fois supérieur à la stoechiométrie, dans la chambre de précombustion, et des moyens pour enflammer le mélange combustible dans celle-ci, ladite chambre de précombustion et les orifices étant dimensionnés pour présenter un paramètre d'étranglement sans cote

$$\beta = \left( \frac{\text{surface d'étranglement x diamètre du cylindre de combustion}}{\text{volume de la chambre de précombustion}} \right)$$

qui est situé sensiblement dans la plage de 0,3 à 0,8, caractérisé en ce que la chambre de précombustion a au moins une paire, et pas plus de deux paires, d'orifices de sortie dirigés à l'opposé l'un de l'autre, et le dispositif d'allumage est orienté pour que les orifices de sortie de la ou des premières paires soient positionnés de telle sorte que leurs jets d'allumage soient dirigés le long d'une première ligne s'étendant entre les soupapes d'admission et les soupapes d'échappement de la chambre, favorisant ainsi une combustion de bon rendement dans la chambre de combustion, tandis que les orifices de sortie de la seconde paire, s'il y en a une, sont positionnés de telle sorte que leurs jets d'allumage soient dirigés le long d'une seconde ligne transversale par rapport à la première ligne.

**2.** Moteur à combustion interne selon la revendication 1, dans lequel la chambre de combustion comporte un toit incliné présentant une crête qui s'étend entre les soupapes d'admission et d'échappement, le dispositif d'allumage étant orienté suivant une ligne qui dirige les jets d'allumage transversalement par rapport à ladite crête du toit défini entre les paires de soupapes d'admission et d'échappement.

**3.** Moteur selon la revendication 1 ou 2, dans lequel le volume de la chambre de précombustion est égal à plus de 0,5 %, environ, et à moins de 0,8 % du volume de la chambre de combustion.

**4.** Moteur selon la revendication 1, 2 ou 3, dans lequel le paramètre d'étranglement sans cote des orifices est d'environ 0,4 à 0,7.

**5.** Moteur selon l'une quelconque des revendications 1 à 4, dans lequel le mélange riche en hydrogène est environ 3 fois supérieur à la stoechiométrie.

**6.** Moteur selon l'une quelconque des revendications 1 à 5, dans lequel la chambre de précombustion fait partie d'une structure qui est apte à être logée dans l'ouverture de bougie standard d'un moteur à combustion interne.

**7.** Moteur selon la revendication 6, dans lequel la chambre de précombustion fait partie d'une structure de bougie.

**8.** Moteur selon l'une quelconque des revendications 1 à 7, dans lequel les moyens pour produire un mélange combustible dans la chambre de précombustion comprennent des moyens pour injecter le carburant contenant l'hydrogène dans ladite chambre de précombustion.

**9.** Moteur selon l'une quelconque des revendications 1 à 8, dans lequel la chambre de précombustion comporte un catalyseur de reformage et des moyens de chauffage pour produire un mélange d'hydrogène à combustion rapide dans la chambre de précombustion.

**10.** Moteur selon l'une quelconque des revendications précédentes, dans lequel le dispositif d'allumage a une seule paire d'orifices, qui sont disposés sur un axe diamétral du dispositif d'allumage.

**11.** Moteur selon la revendication 10, dans lequel les orifices de sortie comportent un passage d'admission qui mène à une paire de passages de sortie se terminant par la paire d'orifices de sortie.

**12.** Moteur selon la revendication 11, dans lequel les passages de sortie s'étendent suivant un certain angle du passage d'admission jusqu'aux orifices de sortie.

**13.** Moteur selon l'une quelconque des revendications 11 ou 12, dans lequel le passage d'admission a la forme d'un cône renversé.

**14.** Moteur selon l'une quelconque des revendications, comportant deux paires d'orifices de sortie dans des paires dirigées à l'opposé l'une de l'autre.

**15.** Moteur selon la revendication 14, dans lequel chaque paire d'orifices est disposée sur un axe diamétral, et les axes sont perpendiculaires entre eux.

**16.** Moteur selon l'une quelconque des revendications 8 à 15, dans lequel les orifices de sortie ont une forme ovale.

**17.** Méthode pour faire fonctionner un moteur à combustion interne comportant au moins une chambre de combustion pourvue de deux soupapes d'admission et de deux soupapes d'échappement, qui consiste à introduire un mélange riche en hydrogène à combustion rapide environ 1,2 à 7 fois supérieur à la stoechiométrie dans une chambre de précombustion d'un dispositif d'allumage associé à une chambre de combustion du moteur, dont le volume est situé sensiblement dans la plage de 0,5 % à moins de 2 % du volume de la chambre de combustion, le dispositif d'allumage présentant des orifices de sortie qui ont un paramètre d'étranglement sans cote

$$\beta = \left( \frac{\text{surface d'étranglement x diamètre du cylindre de combustion}}{\text{volume de la chambre de précombustion}} \right)$$

qui est situé sensiblement dans la plage de 0,3 à 0,8, et qui consiste à enflammer le mélange dans la chambre de précombustion pour produire des jets d'allumage qui sortent des orifices de sortie, caractérisée par la mesure qui consiste à prévoir au moins une paire, et pas plus de deux paires, d'orifices de sortie qui sont dirigés à l'opposé l'un de l'autre, dans la chambre de précombustion, et d'où des jets d'allumage sortent dans des directions opposées, les orifices de sortie de cette paire ou de ces paires étant positionnés pour diriger les jets d'allumage le long d'une première ligne s'étendant entre les soupapes d'admission et les soupapes d'échappement de la chambre, favorisant ainsi une combustion de bon rendement dans la chambre de combustion, tandis que les orifices de sortie de la seconde paire, s'il y en a une, sont positionnés de telle sorte que leurs jets d'allumage soient dirigés le long d'une seconde ligne transversale par rapport à la première ligne.

18. Méthode selon la revendication 17, selon laquelle la chambre de combustion comporte un toit incliné présentant une crête qui s'étend entre les soupapes d'admission et d'échappement, le dispositif d'allumage étant orienté suivant une ligne qui dirige les jets d'allumage transversalement par rapport à ladite crête du toit incliné défini entre les paires de soupapes d'admission et d'échappement.

19. Méthode selon la revendication 17 ou 18, selon laquelle le moteur à combustion interne est conforme à l'une quelconque des revendications 2 à 16.

$\overline{\text{III}}$. 1.

$\overline{\text{III}}$. 2.

$\overline{\text{III}}$. 3.

$\overline{\text{III}}$. 4.

FIG. 3A.

FIG. 4A.

FIG. 4B.

FIG. 4C.

FIG. 5.

FIG. 5A.

_Fig._ 6 .

_Fig._ 7 .

FIG. 8.

FIG. 9.

FIG. 10.

FIG. 11.